# FASCICULE DE BREVET EUROPEEN

(11) **EP 2 648 963 B1**
(45) Date de publication et mention de la délivrance du brevet: **04.11.2015**
(21) Numéro de dépôt: 11805083.0
(22) Date de dépôt: 02.12.2011
(51) Int. Cl.: B62D 15/02, G01S 11/12, G06K 9/00

(54) **DISPOSITIF D'AIDE PERMETTANT AU CONDUCTEUR D'UN VEHICULE DE VERIFIER UNE ZONE DE STATIONNEMENT QUITTEE**
FAHRHILFEVORRSICHTUNG FÜR EINEN FAHRER EINES FAHRZEUGS ZUM PRÜFEN EINES GERADE VERLASSENEN PARKBEREICHS
DRIVING AID DEVICE ALLOWING THE DRIVER OF A VEHICLE TO CHECK A PARKING AREA HE HAS JUST LEFT

(30) Priorité: 06.12.2010 FR 1060127
(43) Date de publication de la demande: 16.10.2013
(73) Titulaire: Peugeot Citroën Automobiles SA, 78140 Vélizy Villacoublay (FR)
(72) Inventeur: LARGE, Frederic, F-78180 Montigny Le Bretonneux (FR); MICHEL, Thierry, F-78110 Le Vesinet (FR)
(86) Numéro de dépôt international: PCT/FR2011/052850
(87) Numéro de publication internationale: WO 2012/076789

(56) Documents cités:
- EP-A1- 1 462 762
- DE-A1-102007 036 251
- US-A1- 2007 057 816
- US-A1- 2007 088 474

## Description

L'invention concerne les véhicules, éventuellement de type terrestre, et plus précisément les dispositifs embarqués qui sont destinés à aider les conducteurs lorsqu'ils conduisent leurs véhicules.

Un certain nombre de dispositifs d'aide ont déjà été proposés pour aider le conducteur d'un véhicule, comme par exemple un véhicule automobile, lorsqu'il conduit. Ainsi, il existe des dispositifs d'aide à la conduite, comme par exemple celui qui est destiné à détecter des objets susceptibles de constituer des obstacles, ou celui qui est destiné à détecter des franchissements de lignes, ou celui qui est destiné à corriger une trajectoire, ou encore celui qui est destiné à adapter la vitesse du véhicule en fonction de la distance qui le sépare d'un véhicule qui le précède. Il existe également des dispositifs d'aide aux manoeuvres, comme par exemple celui qui est destiné à détecter une place de stationnement adaptée à un véhicule, ou celui qui est destiné à fournir des images des zones qui sont situées sur les côtés avant et arrière d'un véhicule, ou celui qui est destiné à faciliter une manoeuvre dans un passage délicat, ou encore celui qui est destiné à faciliter le stationnement d'un véhicule.

Tous ces dispositifs d'aide agissent en temps réel de façon à fournir des informations utilisables immédiatement par le conducteur ou par l'électronique embarquée. Par conséquent, les images réelles ou de synthèse (ou virtuelles) qui sont acquises ou générées par ces dispositifs d'aide disparaissent immédiatement après avoir été affichées, car elles ne présentent a priori plus d'intérêt postérieurement à leur affichage.

Or, lorsqu'un conducteur effectue certaines manoeuvres, comme par exemple une marche arrière ou avant pour sortir d'une zone de stationnement, il se concentre généralement sur la zone qui est sensiblement centrée sur sa direction d'observation et donc il ne peut pas observer en même temps l'écran sur lequel sont affichées en temps réel les images représentant l'environnement immédiat de son véhicule. De ce fait, une fois que le conducteur a terminé sa manoeuvre, il ne dispose plus d'image de la zone de stationnement qu'il vient de quitter, et donc il ne peut pas savoir, par exemple, si il a malencontreusement oublié un objet dans cette zone de stationnement.

On connait ainsi du document EP1462762A1 un dispositif conforme au préambule de la revendication 1.

L'invention a donc pour but d'améliorer la situation en permettant au conducteur de vérifier s'il n'a pas laissé d'objet(s) dans la zone de stationnement qu'il a quittée.

Elle propose notamment à cet effet un dispositif, conforme à la partie caractérisante de la revendication 1.
➢ les traitements peuvent être choisis parmi (au moins) une production de gros plan, une fourniture d'angle de vue choisi, une fourniture d'effet tridimensionnel, une transformation d'une partie d'image relative à un type d'obstacle choisi, et un enrichissement d'informations;
   - les enrichissements d'informations peuvent être choisis parmi (au moins) une fourniture d'informations sur des obstacles détectés dans l'environnement immédiat du véhicule, des coordonnées de position de la zone de stationnement, une insertion d'obstacle(s) détecté(s) dans l'environnement immédiat du véhicule;
   - les seconds moyens de traitement peuvent être agencés, en cas de détection d'un véhicule avec une plaque d'immatriculation lisible dans le voisinage immédiat de la zone de stationnement, pour transformer les données d'image représentatives de cette plaque d'immatriculation afin de rendre illisible cette dernière lors de son affichage;
   - les seconds moyens de traitement peuvent être agencés, en cas de détection d'un visage d'une personne dans la zone de stationnement ou dans son voisinage immédiat, pour transformer les données d'image représentatives de ce visage afin de rendre ce dernier impossible à reconnaître lors de son affichage;
   - les seconds moyens de traitement peuvent être agencés, en cas de détection dans la zone de stationnement ou dans son voisinage immédiat d'un objet de petites dimensions, pour générer un signal d'alerte, destiné à déclencher la diffusion dans le véhicule d'un signal sonore dédié et/ou d'un message audio dédié.

L'invention propose également un véhicule, éventuellement de type automobile, et comprenant un dispositif d'aide du type de celui présenté ci-avant.

D'autres caractéristiques et avantages de l'invention apparaîtront à l'examen de la description détaillée ci-après, et des dessins annexés, sur lesquels:
- la figure 1 illustre schématiquement et fonctionnellement, dans une vue du dessus, un exemple de véhicule automobile équipé d'un exemple de réalisation de dispositif d'aide selon l'invention,
- les figures 2A à 2E illustrent schématiquement et respectivement cinq phases successives d'acquisition d'une image de synthèse, dans une vue du dessus, d'une zone de stationnement d'un véhicule dans un parking, ces cinq phases correspondant respectivement à cinq moments successifs d'une manoeuvre de sortie de ce véhicule hors de cette zone de stationnement, et
- la figure 3 illustre schématiquement un écran d'affichage sur lequel se trouve affichée l'image de synthèse de la zone de stationnement acquise et stockée grâce au dispositif d'aide selon l'invention.

Les dessins annexés pourront non seulement servir à compléter l'invention, mais aussi contribuer à sa définition, le cas échéant.

L'invention a pour but d'offrir un dispositif (D) destiné à aider un conducteur lorsqu'il conduit son véhicule (V).

Dans ce qui suit, on considère, à titre d'exemple non limitatif, que le véhicule (V) est de type automobile, comme par exemple une voiture, un autocar, un camion ou un véhicule utilitaire. Mais, l'invention n'est pas limitée à ce type de véhicule. Elle concerne en effet tout type de véhicule terrestre ou maritime (ou fluvial) pouvant effectuer des déplacements et des manoeuvres sur le sol ou sur l'eau.

On a schématiquement et fonctionnellement représenté sur l'unique figure un véhicule automobile de type voiture V, équipé d'un exemple de réalisation d'un dispositif d'aide D selon l'invention.

Cette voiture V comprend classiquement une partie avant PV et une partie arrière PR opposée à la partie avant PV.

Le dispositif d'aide D comprend au moins des moyens de contrôle MC.

Dans l'exemple non limitatif illustré, le dispositif d'aide D est un équipement qui ne fait pas partie de l'ordinateur de bord du véhicule V, mais qui lui est préférentiellement couplé. Mais, il pourrait faire partie de cet ordinateur de bord. Par conséquent, le dispositif d'aide D peut être réalisé sous la forme de circuits électroniques, ou de modules logiciels (ou informatiques), ou bien d'une combinaison de circuits électroniques et de modules logiciels.

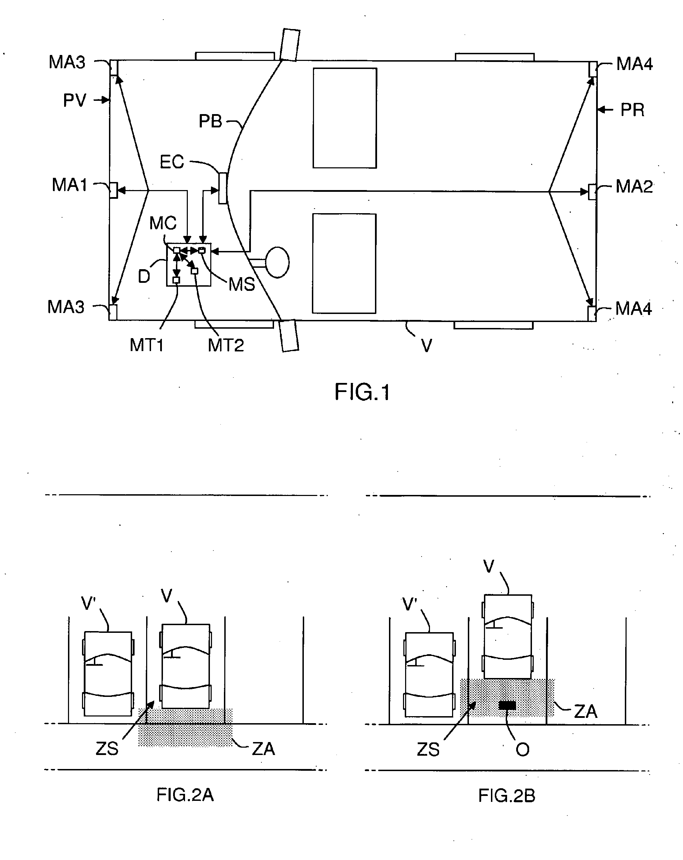

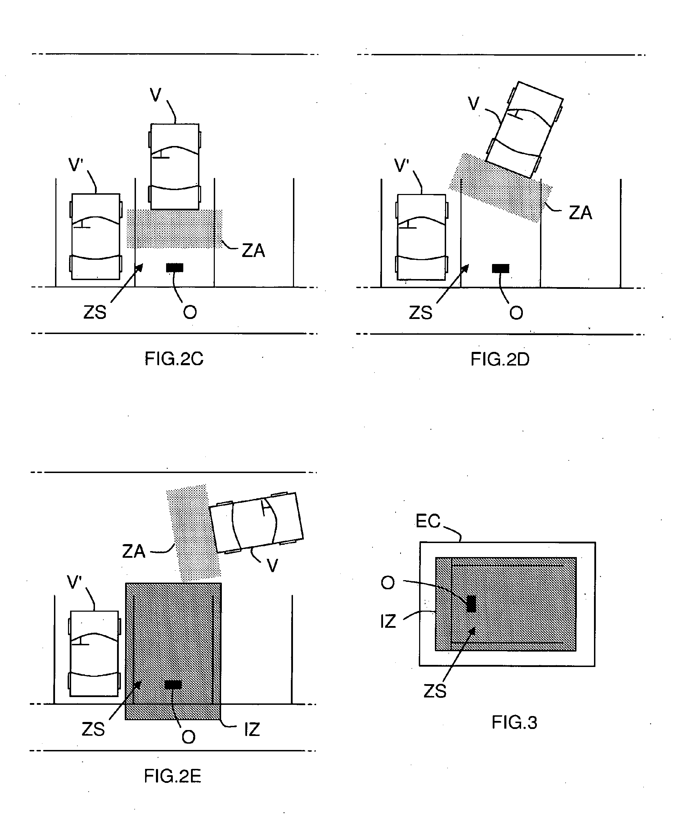

Les moyens de contrôle MC sont agencés (ou conçus) pour intervenir lorsque le véhicule V, dans lequel ils sont embarqués, vient tout juste de quitter une zone de stationnement ZT (voir figures 2A à 2E). Chaque fois qu'une telle situation survient, les moyens de contrôle MC contrôlent le stockage de données d'image qui sont représentatives d'une partie au moins de la zone de stationnement ZS dans une vue du dessus.

Dans l'exemple non limitatif illustré sur la figure 1, le dispositif d'aide D comprend des moyens de stockage MS couplés à ses moyens de contrôle MC et dans lesquels ces derniers MC stockent les données d'image précitées. Mais, ces moyens de stockage MS pourraient être externes au dispositif d'aide D. Tout type de moyens de stockage connu de l'homme de l'art peut être envisagé, et notamment une mémoire (éventuellement de type logiciel).

Grâce à ce stockage des données d'image qui représentent une partie au moins d'une zone de stationnement ZS quittée, les moyens de contrôle MC sont en mesure, lorsque le conducteur du véhicule V le requiert, de contrôler l'extraction des données d'image stockées afin qu'elles soient utilisées pour afficher une représentation de cette partie au moins de la zone de stationnement ZS sur un écran EC qui est présent dans le véhicule V. Ainsi, le conducteur peut, en observant l'écran EC, vérifier si il n'a pas laissé d'objet(s) dans la dernière zone de stationnement ZS qu'il a quittée.

On notera que les moyens d'affichage EC sont implantés dans une zone choisie du véhicule V (en visibilité directe pour le conducteur) et sont chargés de transformer les données d'image, extraites des moyens de stockage MS (et éventuellement traitées, comme on le verra plus loin), en une image affichée IZ (voir figure 3). Ces moyens d'affichage EC sont par exemple un écran implanté dans la planche de bord PB du véhicule V (en position centrale), ou dans le tableau de bord du véhicule V, ou bien en position haute (tête haute) sur le pare-brise du véhicule V. Par ailleurs, ces moyens d'affichage EC peuvent éventuellement faire partie du dispositif d'aide D.

Il est également important de noter que les données d'image qui représentent une zone de stationnement ZS définissent une image de synthèse (ou virtuelle) IZ qui a été générée par des premiers moyens de traitement MT1 à partir de données acquises par des moyens d'acquisition MAi (images réelles, ainsi qu'éventuellement données d'inspection (comme par exemple des données radar)).

Comme illustré non limitativement sur la figure 1, le dispositif d'aide D peut comprendre ces premiers moyens de traitement MT1 qui sont agencés pour produire les données d'image représentatives de la partie au moins de la zone de stationnement ZS.

Les moyens d'acquisition MAi comprennent au moins une caméra d'observation qui est solidarisée au véhicule V dans une position qui lui permet d'observer une partie au moins de son environnement immédiat, et en particulier une zone ZA qui est située derrière son pare-choc arrière ou devant son pare-choc avant. Chaque caméra (d'observation) MAi fournie des images réelles.

Dans l'exemple non limitatif illustré sur la figure 1, les moyens d'acquisition MAi comprennent deux caméras d'observation MA1 et MA2 implantées en position centrale respectivement à l'avant et à l'arrière du véhicule V (par exemple dans les pare-chocs ou boucliers), ainsi que des moyens d'analyse par voie d'ondes MA3 et MA4, comme par exemple des détecteurs radar, implantés respectivement à l'avant et à l'arrière du véhicule V (par exemple dans les pare-chocs ou boucliers) dans des positions qui leur permettent de détecter des obstacles dans leur environnement immédiat. Il est rappelé que des moyens d'analyse par voie d'ondes fournissent des données d'inspection à partir desquelles on peut générer une cartographie 2D, 2,5D ou 3D de l'environnement immédiat extérieur au véhicule V.

Il est important de noter que l'un au moins des moyens d'acquisition MAi peut faire éventuellement partie du dispositif d'aide D. Par conséquent, l'un au moins des moyens d'acquisition MAi peut être éventuellement un équipement qui assure au moins une autre fonction au sein du véhicule V. Dans ce dernier cas, les données acquises par l'équipement doivent être récupérées soit auprès de ce dernier, soit sur le bus informatique du véhicule V, soit auprès de l'ordinateur de bord du véhicule V. Par exemple, les moyens d'acquisition MAi peuvent appartenir à un dispositif d'aide au stationnement.

Pour générer les données d'image d'une zone de stationnement ZT à partir des données d'image acquises au moyen d'une caméra MA1 ou MA2, on peut, par exemple, utiliser la méthode qui est décrite dans le document brevet FR 09 53271, dont le contenu technique est ici incorporé par référence. Cette méthode est très schématiquement illustrée sur les figures 2A à 2E. Elle consiste, de façon simplifiée, à acquérir avec l'une au moins des caméras MA1 et MA2 du véhicule V des images successives de sa zone d'acquisition ZA, puis à recaler ses images successives les unes par rapport aux autres en fonction des déplacements effectués par le véhicule V entre ses différentes images afin de constituer progressivement une image de synthèse complète IZ de la zone de stationnement ZT du véhicule V dans une vue du dessus. On comprendra que cette méthode nécessite des moyens de stockage capables de mémoriser les données d'image de chaque image "intermédiaire" et de l'image de synthèse en cours de construction incrémentale. On comprendra également que les recalages des images réelles et la constitution de l'image de synthèse complète IZ est effectuée par les premiers moyens de traitement MT1.

Dans l'exemple non limitatif illustré sur les figures 2A à 2E, on n'utilise de façon simplifiée que la caméra arrière MA2 du véhicule V pour constituer progressivement l'image de synthèse complète IZ de la zone de stationnement ZT du véhicule V dans une vue du dessus. Cette caméra arrière MA2 acquiert périodiquement une image réelle d'une zone d'acquisition ZA située derrière le véhicule V, et les données d'image définissant chaque image sont stockées temporairement afin de pouvoir être recalées les unes par rapport aux autres au fur et à mesure de leur acquisition. Lorsque le véhicule V a totalement quitté sa zone de stationnement ZS (figure 2E), on dispose d'une image de synthèse complète IZ de cette dernière (ZS). C'est cette image de synthèse complète IZ qui est stockée par les moyens de contrôle MC du dispositif d'aide D dans les moyens de stockage MS.

De préférence, et comme illustré sur les figures 2E et 3, l'image de synthèse complète IZ représente dans une vue du dessus une partie au moins d'une zone de stationnement ZS sans le véhicule V, de sorte que le conducteur puisse détecter un objet qui serait passé sous son véhicule V lors de son stationnement. Dans l'exemple non limitatif illustré sur les figures 2B à 2E et 3, on peut observer qu'un objet O apparaît progressivement sous le véhicule V et donc se retrouve matérialisé sur l'image de synthèse complète IZ. Un tel objet O peut par exemple être un sac ou un article oublié ou tombé, ou bien des clés ou un portefeuille (ou porte-monnaie) tombé(e) d'une poche, lors du chargement du véhicule V.

On notera que le début de l'acquisition des images réelles permettant de construire une image de synthèse complète IZ, peut être décidé chaque fois que le conducteur desserre le frein de parking du véhicule V. Dans une variante, le début de l'acquisition peut être décidé chaque fois que le véhicule V se met en marche après avoir été immobilisé pendant une certaine durée prédéfinie, éventuellement moteur coupé. La position et l'éventuelle orientation du véhicule V au début de l'acquisition défini(ssen)t l'origine du repère associé à la zone de stationnement ZS et, de préférence, les limites de cette dernière (ZS).

On notera également que la fin de l'acquisition des images réelles peut être déclenchée lorsque l'on a construit une image de synthèse complète IZ qui correspond aux limites de la zone de stationnement ZS déterminées au début de l'acquisition. Dans une variante, la fin de l'acquisition peut être décidée lorsque le véhicule V s'est éloigné d'une distance prédéfinie de son point de départ dans la zone de stationnement ZS (c'est-à-dire par rapport à l'origine du repère).

Par ailleurs, les instructions qui déclenchent l'extraction des données d'image par les moyens de contrôle MC peuvent résulter soit d'un paramétrage effectué précédemment par le conducteur, soit d'une action effectuée par le conducteur au moyen d'une interface homme/machine (ou IHM) qui fait partie du dispositif d'aide D ou d'un autre équipement du véhicule V. Tout type d'interface homme/machine (ou IHM) connu de l'homme de l'art peut être ici utilisé, dès lors qu'il permet au conducteur de signaler au dispositif d'aide D, et plus précisément à ses moyens de contrôle MC, qu'un affichage de la zone de stationnement ZS quittée est requis. Ainsi, l'interface homme/machine (ou IHM) peut se présenter sous la forme de moyens de saisie tactile définis sur un écran tactile ou bien d'un organe permettant de se déplacer dans des menus prédéfinis afin de sélectionner un sous-menu dédié à l'affichage de la zone de stationnement ZS.

On notera, comme illustré non limitativement sur la figure 1, que le dispositif d'aide D comprend des seconds moyens de traitement MT2 agencés pour traiter les données d'image, qui sont extraites par les moyens de contrôle MC, en fonction d'instructions fournies par le conducteur, afin de délivrer des données d'image traitées.

Ces instructions peuvent être fournies par le conducteur au moyen de l'interface homme/machine (ou IHM) décrite ci-avant.

Tout type de traitement de données d'image, connu de l'homme de l'art et destiné à faciliter l'observation d'une zone de stationnement ZS par un conducteur, peut être envisagé. Ainsi, les seconds moyens de traitement MT peuvent produire un gros plan (ou zoom arrière) ou un plan large (ou zoom avant) et/ou fournir une image sous un angle de vue choisi et/ou fournir un effet tridimensionnel (3D) ou 2,5D et/ou transformer une partie d'une image relative à un type d'obstacle choisi et/ou enrichir une image IZ avec certaines informations.

Parmi les différents enrichissements d'informations que les seconds moyens de traitement MT2 peuvent effectuer, on peut notamment citer la fourniture, par insertion ou superposition, d'informations sur des obstacles qui ont été détectés dans l'environnement immédiat du véhicule V ou de coordonnées de position de la zone de stationnement ZS ou encore d'obstacle(s) détecté(s) dans l'environnement immédiat du véhicule V. L'obtention des coordonnées de position nécessite une interaction avec un dispositif de positionnement, par exemple par satellites (éventuellement de type GPS). Parc ailleurs, les autres informations peuvent être obtenues par les seconds moyens de traitement MT2 et/ou par au moins un autre équipement embarqué dans le véhicule V.

On notera que certains des enrichissements d'information peuvent nécessiter l'acquisition de données d'inspection (par exemple des données radar) à partir desquelles on déduit des informations de position (distance et éventuelle orientation). Ces données d'inspection peuvent, par exemple, être fournies par des radars avant MA3 et arrière MA4.

On notera également que certains des enrichissements d'information peuvent nécessiter la mise en oeuvre de techniques de reconnaissance de forme. Toute technique d'analyse d'image connue de l'homme de l'art et permettant d'obtenir des informations de forme peut être ici utilisée.

Les seconds moyens de traitement MT2 peuvent être agencés, en cas de détection dans le voisinage immédiat de la zone de stationnement ZS d'un autre véhicule V' avec une plaque d'immatriculation lisible, pour transformer les données d'image qui sont représentatives de la plaque d'immatriculation afin de rendre illisible cette dernière lors de son affichage (par exemple par un effet de flou). Cette détection peut être obtenue par une technique de reconnaissance de forme.

Par ailleurs, les seconds moyens de traitement MT2 peuvent être agencés, en cas de détection dans la zone de stationnement ZS ou dans son voisinage immédiat du visage d'une personne, pour transformer les données d'image qui sont représentatives de ce visage afin de rendre ce dernier impossible à reconnaître lors de son affichage (par exemple par un effet de flou). Cette détection peut être obtenue par une technique de reconnaissance de forme.

Un effet de flou peut être rendu nécessaire lorsqu'un visage ou une plaque d'immatriculation apparaît dans une image de synthèse complète IZ, par exemple consécutivement à un changement d'angle de vue.

On notera également que les seconds moyens de traitement MT2 peuvent être agencés, en cas de détection dans la zone de stationnement ZS ou dans son voisinage immédiat d'un objet de petites dimensions pour générer un signal d'alerte qui est destiné à déclencher la diffusion dans le véhicule V (par exemple au moyen des haut-parleurs) d'un signal sonore dédié (mélodie d'alarme) et/ou d'un message audio dédié (obtenu par synthèse vocale). Cela est particulièrement avantageux car cela peut permettre d'alerter immédiatement le conducteur afin qu'il observe l'image de synthèse complète IZ affichée sur l'écran EC, si il a oublié de le faire spontanément après la sortie de la zone de stationnement ZS.

Il est important de noter que le dispositif d'aide D selon l'invention peut éventuellement faire partie d'un dispositif embarqué offrant une ou plusieurs autres fonctions d'aide à la conduite et/ou aux manoeuvres. Il peut également offrir lui-même, en complément, une ou plusieurs autres fonctions d'aide à la conduite et/ou aux manoeuvres. Parmi ces fonctions d'aide complémentaires, on peut notamment citer la détection d'objets susceptibles de constituer des obstacles, la détection de franchissements de lignes, la correction de trajectoire, l'adaptation de la vitesse du véhicule en fonction de la distance qui le sépare d'un véhicule qui le précède, la détection de place de stationnement adaptée à un véhicule, la fourniture d'imagés de zones qui sont situées sur les côtés avant et/ou arrière d'un véhicule, l'assistance lors d'une manoeuvre dans un passage délicat, ou l'assistance pendant une manoeuvre de stationnement.

L'invention ne se limite pas aux modes de réalisation de dispositif d'aide et de véhicule décrits ci-avant, seulement à titre d'exemple, mais elle englobe toutes les variantes que pourra envisager l'homme de l'art dans le cadre des revendications ci-après.

## Revendications

1. Dispositif d'aide (D) pour un conducteur d'un véhicule (V), comprenant des moyens d'acquisition (MAi) de données d'image représentatives d'une partie au moins d'une zone de stationnement (ZS) dudit véhicule, des moyens de stockage (MS) agencés pour stocker les données d'image, des moyens de contrôle (MC) et des premiers moyens de traitement (MT1), lesdits moyens de contrôle (MC) étant agencés pour activer lesdits premiers moyens de traitement et produire les dites données d'image représentatives de ladite partie au moins de la zone de stationnement (ZS), en fonction de données acquises par les moyens d'acquisition (MAi), **caractérisé en ce qu'**il comprend en outre des seconds moyens de traitement (MT2) activés par les moyens de contrôle (MC) pour traiter des données d'image extraites des moyens de stockage (MS) d'image, représentatives de la zone de stationnement (ZS) quittée par le véhicule, en fonction d'instructions fournies par ledit conducteur après que le véhicule a quitté la zone de stationnement.

2. Dispositif selon la revendication 1, **caractérisé en ce que** lesdits moyens de traitement (MT2) sont agencés, en cas de détection dans le voisinage immédiat de ladite zone de stationnement (ZS) d'un véhicule avec une plaque d'immatriculation lisible, pour transformer les données d'image représentatives de ladite plaque d'immatriculation afin de rendre illisible cette dernière lors de son affichage.

3. Dispositif selon l'une des revendications 1 ou 2, **caractérisé en ce que** lesdits moyens de traitement (MT2) sont agencés, en cas de détection dans ladite zone de stationnement (ZS) ou dans son voisinage immédiat d'un visage d'une personne, pour transformer les données d'image représentatives dudit visage afin de rendre ce dernier impossible à reconnaître lors de son affichage.

4. Dispositif selon l'une des revendications 1 à 3, **caractérisé en ce que** lesdits moyens de traitement (MT2) sont agencés, en cas de détection dans ladite zone de stationnement (ZS) ou dans son voisinage immédiat d'un objet de petites dimensions pour générer un signal d'alerte, destiné à déclencher la diffusion dans ledit véhicule (V) d'un signal sonore dédié et/ou d'un message audio dédié.

5. Dispositif selon l'une des revendications précédentes , **caractérisé en ce que** lesdits moyens d'acquisition (MAi) sont choisis dans un groupe comprenant au moins une caméra d'observation solidarisée à une partie arrière dudit véhicule (V), une caméra d'observation solidarisée à une partie avant dudit véhicule (V), des moyens d'analyse par voie d'ondes solidarisés à une partie arrière dudit véhicule (V), et dés moyens d'analyse par voie d'ondes solidarisés à une partie avant dudit véhicule (V).

6. Dispositif selon l'une des revendications précédentes, **caractérisé en ce que** lesdits traitements sont choisis dans un groupe comprenant au moins une production de gros plan, une fourniture d'angle de vue choisi, une fourniture d'effet tridimensionnel, une transformation d'une partie d'image relative à un type d'obstacle choisi, et un enrichissement d'informations.

7. Dispositif selon l'une des revendications précédentes, **caractérisé en ce qu'**il comporte un écran (EC) présent dans ledit véhicule (V) pour afficher la zone de stationnement (ZS) lorsque ledit conducteur le requiert.

8. Dispositif selon la revendication 7, **caractérisé en ce que** lesdits enrichissements d'informations comprennent au moins une fourniture d'informations sur des coordonnées de position de ladite zone de stationnement (ZS).

9. Véhicule (V), **caractérisé en ce qu'**il comprend un dispositif d'aide (D) selon l'une des revendications précédentes.

10. Véhicule selon la revendication 9, **caractérisé en ce qu'**il est de type automobile.

## Patentansprüche

1. Hilfsvorrichtung (D) für einen Fahrer eines Fahrzeugs (V), umfassend Erfassungsmittel (MAi) für Bilddaten, die für mindestens einen Teil eines Parkbereichs (ZS) des Fahrzeugs bezeichnend sind, Speichermittel (MS), die angeordnet sind, um die Bilddaten zu speichern, Kontrollmittel (MC) und erste Verarbeitungsmittel (MT1), wobei die Kontrollmittel (MC) angeordnet sind, um die ersten Verarbeitungsmittel zu aktivieren und die Bilddaten, die für den mindestens einen Teil des Parkbereichs (ZS) bezeichnend sind, zu erzeugen, in Abhängigkeit von Daten, die von den Erfassungsmitteln (MAi) erfasst werden, **dadurch gekennzeichnet, dass** sie ferner zweite Verarbeitungsmittel (MT2) umfasst, die von den Kontrollmitteln (MC) aktiviert werden, um Bilddaten zu verarbeiten, die aus den Bildspeichermitteln (MS) extrahiert werden und die für den Parkbereich (ZS) bezeichnend sind, der vom Fahrzeug verlassen wurde, in Abhängigkeit von Befehlen, die vom Fahrer geliefert werden, nachdem das Fahrzeug den Parkbereich verlassen hat.

2. Vorrichtung nach Anspruch 1, **dadurch gekennzeichnet, dass** die Verarbeitungsmittel (MT2) angeordnet sind, um im Fall einer Erkennung eines Fahrzeugs mit einem lesbaren Kraftfahrzeugkennzeichen in der unmittelbaren Umgebung des Parkbereichs (ZS) die Bilddaten, die für das Kraftfahrzeugkennzeichen bezeichnend sind, umzuwandeln, um dieses bei seiner Anzeige unlesbar zu machen.

3. Vorrichtung nach einem der Ansprüche 1 oder 2, **dadurch gekennzeichnet, dass** die Verarbeitungsmittel (MT2) angeordnet sind, um im Fall einer Erkennung eines Gesichts einer Person im Parkbereich (ZS) oder in seiner unmittelbaren Umgebung die Bilddaten, die für das Gesicht bezeichnend sind, umzuwandeln, um dieses bei seiner Anzeige nicht wiedererkennbar zu machen.

4. Vorrichtung nach einem der Ansprüche 1 bis 3, **dadurch gekennzeichnet, dass** die Verarbeitungsmittel (MT2) angeordnet sind, um im Fall einer Erkennung eines Gegenstands mit kleinen Abmessungen im Parkbereich (ZS) oder in seiner unmittelbaren Umgebung ein Alarmsignal zu erzeugen, das dazu bestimmt ist, im Fahrzeug (V) die Ausgabe eines bestimmten akustischen Signals und/oder einer bestimmten Audionachricht auszulösen.

5. Vorrichtung nach einem der vorhergehenden Ansprüche, **dadurch gekennzeichnet, dass** die Erfassungsmittel (MAi) aus einer Gruppe gewählt werden, umfassend mindestens eine Beobachtungskamera, die mit einem rückwärtigen Teil des Fahrzeugs (V) fest verbunden ist, eine Beobachtungskamera, die mit einem vorderen Teil des Fahrzeugs (V) fest verbunden ist, Analysemittel via Wellen, die mit einem rückwärtigen Teil des Fahrzeugs (V) fest verbunden sind, und Analysemittel via Wellen, die mit einem vorderen Teil des Fahrzeugs (V) fest verbunden sind.

6. Vorrichtung nach einem der vorhergehenden Ansprüche, **dadurch gekennzeichnet, dass** die Verarbeitungen aus einer Gruppe gewählt werden, umfassend mindestens eine Erzeugung einer Großaufnahme, eine Bereitstellung eines gewählten Blickwinkels, eine Bereitstellung eines dreidimensionalen Effekts, eine Umwandlung eines Bildteils bezogen auf eine gewählte Hindernisart und eine informationsanreicherung.

7. Vorrichtung nach einem der vorhergehenden Ansprüche, **dadurch gekennzeichnet, dass** sie ein Display (EC) umfasst, das im Fahrzeug (V) vorhanden ist, um den Parkbereich (ZS) anzuzeigen, wenn es der Fahrer verlangt.

8. Vorrichtung nach Anspruch 7, **dadurch gekennzeichnet, dass** die Informationsanreicherungen mindestens eine Bereitstellung von Informationen über Positionskoordinaten des Parkbereichs (ZS) umfassen.

9. Fahrzeug (V), **dadurch gekennzeichnet, dass** es eine Hilfsvorrichtung (D) nach einem der vorhergehenden Ansprüche umfasst.

10. Fahrzeug nach Anspruch 9, **dadurch gekennzeichnet, dass** es vom Typ Kraftfahrzeug ist.

## Claims

1. Assistance device (D) for the driver of a vehicle (V), comprising means (MAi) for acquiring image data representing at least part of a parking zone (ZS) for said vehicle, storage means (MS) arranged to store the image data, control means (MC) and first processing means (MT1), said control means (MC) being arranged to activate said first processing means and to produce said image data representing said at least part of the parking zone (ZS), according to data acquired by the acquisition means (MAi), **characterised in that** it further comprises second processing means (MT2) activated by the control means (MC) in order to process image data extracted from the image storage means (MS), representing the parking zone (ZS) left by the vehicle, according to instructions provided by said driver after the vehicle has left the parking zone.

2. Device according to claim 1, **characterised in that** said processing means (MT2) are arranged, in the case of the detection, in the immediate vicinity of said parking zone (ZS), of a vehicle with a legible number plate, to transform the image data representing said number plate in order to make the latter illegible when it is displayed.

3. Device according to one of claims 1 or 2, **characterised in that** said processing means (MT2) are arranged, in the case of the detection, in said parking zone (ZS) or in its immediate vicinity, of the face of a person, to transform the image data representing said face in order to make it impossible to recognise the latter when it is displayed.

4. Device according to one of claims 1 to 3, **characterised in that** said processing means (MT2) are arranged, in the case of the detection, in said parking zone (ZS) or in its immediate vicinity, of a small object, to generate an alert signal, intended to trigger the broadcasting in said vehicle (V) of an dedicated audible signal and/or of a dedicated audio message.

5. Device according to one of the preceding claims, **characterised in that** said acquisition means (MAi) are chosen from a group comprising at least one observation camera secured to a rear part of said vehicle (V), an observation camera secured to a front part of said vehicle (V), wave-type analysis means secured to a rear part of said vehicle (V), and wave-type analysis means secured to a front part of said vehicle (V).

6. Device according to one of the preceding claims, **characterised in that** said processing operations are chosen from a group comprising at least one close-up production, provision of a chosen viewing angle, provision of a three-dimensional effect, transformation of an image part relating to a chosen obstacle type, and information enhancement.

7. Device according to one of the preceding claims, **characterised in that** it comprises a screen (EC) present in said vehicle (V) for displaying the parking zone (ZS) when said conductor so requires.

8. Device according to claim 7, **characterised in that** said information enhancements comprise at least one provision of information on the position coordinates of said parking zone (ZS).

9. Vehicle (V), **characterised in that** it comprises an assistance device (D) according to one of the preceding claims.

10. Vehicle according to claim 9, **characterised in that** it is of the automobile type.
